# EUROPEAN PATENT APPLICATION

(11) **EP 3 954 449 A1**
(43) Date of publication of application: **16.02.2022**
(21) Application number: 21190305.9
(22) Date of filing: 09.08.2021
(51) Int. Cl.: B01D 17/02, B01D 11/02, B01J 20/34

(54) **DEVICE AND PROCESS FOR THE DEHYDRATION OF ORGANIC SOLVENTS**

(30) Priority: 10.08.2020 IT 202000019906
(71) Applicant: I.T.P. S.r.l. Innovation & Technology Provider, 80121 Napoli (IT)
(72) Inventor: GARELLA, Isidoro, 84013 Salerno (IT); NIGRO, Federica, 80126 Napoli (IT)
(74) Representative: Brazzini, Silvia

(57) **Abstract**

The present invention relates to a highly efficient and versatile device for dehydrating organic solvents, and to the related process implemented with such a device, useful for dehydrating organic solvents, in particular for removing or reducing the water content in mixtures of organic solvents.

## Description

### Field of the invention

The present invention relates to the field of purification systems, and in particular to a device for the dehydration of organic solvents, and the related process carried out with this device.

### Background of the Invention

The purification of organic solvents, in particular their dehydration, i.e. the removal or reduction of their water content to predetermined levels, is a problem that has always been addressed in the field of chemistry and conventionally solved by the use of distillation purification systems. High levels of solvent purity can indeed be achieved with distillation apparatuses by a process in which the solvents to be purified are evaporated by heating and the solvents are separated by fractionation according to their different boiling points.

However, some mixtures of organic solvents are very difficult to dehydrate by simple distillation, due to the formation of binary and ternary azeotropes between the water and the organic solvents. In many cases, complex distillation systems with several rectification columns are required to reduce the water content to the desired values. This obviously entails a number of disadvantages, such as the size of the equipment, and therefore the space required for its operation, as well as high energy consumption and therefore high costs not only for the initial construction of the system but also for its operation.

To overcome these problems, there has been a move towards simpler processes for purifying organic solvents, particularly for dehydrating them, such as treatment in tanks containing a solid dehydrating agent - such as zeolites, ion exchange resins, molecular sieves, silica gel or activated alumina - through which the solvent to be dehydrated is passed. While products such as silica gel or alumina are able to adsorb water on their surface due to their strongly hydrophilic nature, molecular sieves and zeolites can bind water molecules not only on the surface but also within the cavities that characterise their structure. While this type of process is much simpler than fractional distillations and the removal of water from organic solvents is generally effective, this method can only be applied in the laboratory, or at least on a small scale. In fact, large quantities of dehydrating material would be required when dehydrating large quantities of solvents as is required on a large scale in an industrial plant.

To overcome these problems, the use of columns packed with dehydrating material, known as dehydration towers, has been applied on a large scale to reduce the volume of material needed to treat large quantities of solvents. In these systems, generally the passage of the solvent to be dehydrated through the solid dehydrating agent generates two flows, that of the dehydrated solvent leaving the bottom of the tower and that of the aqueous dehydrating agent solution leaving the top. The energy consumption of these systems is high and they are also prone to clogging the outlets of the aqueous solution, which soon becomes supersaturated, with the dehydrating material clogging the outlets. Systems that work against the current have therefore been studied, but energy consumption is still high and the quantity of solid dehydrating agent consumed to operate the system is in any case very high.

Dehydrating materials such as zeolites and molecular sieves and adsorbents such as silica gel or alumina can also be regenerated, i.e. the absorbed water can be removed from the material by, for example, high temperature evaporation, but this, again, would not be feasible on a large scale and in a continuous industrial process. Regeneration is in fact carried out thermally at high temperatures, from a minimum of 120-150°C for adsorbents such as silica gel or alumina, to temperatures even higher than 350°C for molecular sieves. However, such high temperatures lead to a progressive deterioration of the dehydrating material and thus, again, to an increase in production costs.

The technical problems outlined above have not been fully resolved to date, and there is therefore still a need for organic solvent purification systems, particularly for dehydration, which are simple and efficient in reducing the content of water or other impurities to the desired levels, while also being scalable and usable for large quantities of solvent to be treated.

### Summary of the Invention

Subject of the present invention is to provide a device and a process for dehydrating organic solvents which enable the above problems to be overcome, in particular by achieving a high degree of dehydration of large quantities of organic solvents.

A further subject of the present invention is to provide a device and process of the above-mentioned type, which achieve a significant reduction in process costs compared to known systems, in terms of energy consumption and consumption of dehydrating agents.

Yet a further subject of the present invention is to provide a device and a process of the above-mentioned type which allow for prolonged use of a quantity of regenerable dehydrating material within the same device for dehydrating treatment of the organic solvent.

These subjects are achieved by the device and process for dehydrating organic solvents according to the present invention, whose essential features are defined by the related independent claims 1 and 10, appended hereto.

Other features and advantages of the device and process according to the invention will become clearer from the following description of an embodiment thereof, provided by way of non-limiting example, also with reference to the appended figures.

### Brief Description of the Drawings

- Figure 1 represents a functional plant diagram of an embodiment of the device according to the invention;
- Figure 2 schematically represents, in an axonometric and broken view, an evaporation chamber in use in the device of Figure 1; and
- Figure 3 is an axial section of the evaporation chamber of Figure 2.

### Detailed description of the invention

According to the invention, a device and a process are provided for carrying out the dehydration of organic solvents, and in particular of mixtures of organic solvents containing water, by passing the solvents to be dehydrated through a solid matrix of an adsorbent dehydrating material, and then regenerating the solid matrix that has adsorbed the water by the use of halogenated hydrocarbons such as chlorofluorocarbons (CFCs), hydrofluorocarbons (HFCs), or hydrochlorofluorocarbons (HCFCs), or by the use of halogenated hydroolefins such as hydrofluoroolefins (HFOs), or mixtures thereof with halogenated hydrocarbons. In one aspect, this system is applied in particular to the dehydration of mixtures of organic solvents.

In the context of the present invention, "dehydration" is understood to mean the removal or in any case the reduction to varying degrees of the quantity of water initially contained in the organic solvents treated, while "regeneration of the solid dehydrating adsorbing material" is understood to mean the removal of the molecules of water and organic solvent to be treated, superficially adsorbed in the solid material by means of interactions of an electrostatic nature, with consequent restoration of the anhydrating capacity of the matrix.

Halogenated hydrocarbons, in particular HFCs such as 1,1,1,2-Tetrafluoroethane (R134a), which are commonly used in current refrigeration systems, and halogenated hydroolefins, in particular HFOs such as HFO-1234yf and HFO-1234ze, have the particular advantage of being non-flammable, non-toxic and non-harmful by inhalation and ingestion, and at the same time not damaging to the ozone layer in the atmosphere. Tests have also shown that halogenated hydrocarbons have an advantageous chemical affinity towards polar substances, including water, hence their ability to dehydrate solid adsorbent matrices, such as zeolites or molecular sieves, which have adsorbed a quantity of water, even though the solubility of water in these solvents is very low (for R134a, for example, a solubility of about 0.1% was found). This drawback is overcome in the present process, which nevertheless achieves a practically exhaustive removal of the adsorbed water from the surface of the dehydrating material, thanks to the fact that continuously regenerated extraction solvent percolates through the material. This solution, together with the preferential adsorption of water on the dehydrating material compared to the mixture of organic solvents, achieves the final technical effect of obtaining a mixture of organic solvents free from water or at least with a water content reduced to the desired level.

In addition, 1,1,1,2-Tetrafluoroethane and some other HFCs, although gaseous at room temperature and pressure, can be easily liquefied at low pressures so that they can be used in the liquid state, while having the advantage that they can be easily removed from water and adsorbent material at the end of the regeneration process. Furthermore, HFOs are currently recognised as 4th generation refrigerants, already used as refrigerant fluids on their own or in a mixture with HFCs compared to which they have very similar chemical-physical characteristics, but an even lower environmental impact than the generation of the so-called "greenhouse effect".

According to the invention, these advantages are combined with a relatively low volume use of hydrocarbons or halogenated hydroolefins in relation to the mass of the solid dehydrating material to be treated and, above all, of the large quantity of organic solvents subjected to dehydration, so as to effectively control production costs and, moreover, to carry out the process in a shorter time than the main techniques currently used.

This is achieved by first exploiting the capacity of the adsorbent dehydrating material to absorb water and then regenerating it with halogenated hydrocarbons, exploiting the change of state from liquid to vapour and vice versa, with a technique that involves the use of small quantities of halogenated hydrocarbons, quantities comparable in volume to the solid matrix to be dehydrated, which are continuously regenerated during the extraction process in such a way as to present the maximum extractive power whenever they are percolated through the solid material to be regenerated. This takes place in this device by simply conveying the extraction solvent into an evaporation chamber described below, where it is evaporated quickly and the solvent is recondensed just as quickly using compressors. In addition, unlike a conventional extraction process involving the use of Soxhlet, which therefore involves operating at the evaporation temperature of the solvent, in the present case the process can be conducted at ambient or sub-ambient temperatures, which further reduces the production costs and simplifies the plant.

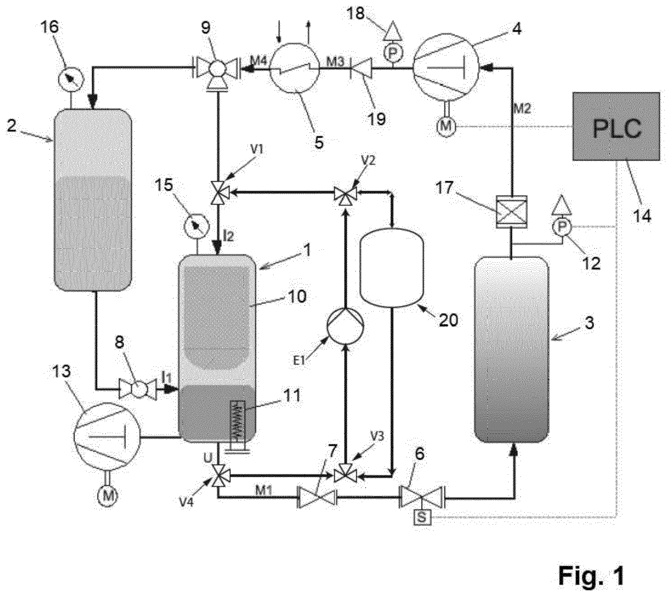

With reference to figures 1-3 appended hereto, in one embodiment, the device according to the invention comprises a treatment chamber 1, for example of a cylindrical structure, provided with a housing, preferably a removable container 10, schematically represented in figure 1, intended to contain a solid dehydrating material. The lower part of the chamber 1 collects the organic solvents that percolate from the solid material during the various dehydration cycles of the process, as will be seen in more detail below.

Heating means such as a heating cartridge 11 arranged within the treatment chamber 1 in its lower part, or an external heating band, may be provided in the present device to set optimal temperature and, indirectly, pressure values to optimize the yield of the extraction process. The treatment chamber 1 may optionally also be provided with a pressure gauge 15 for pressure control and is associated with a pump 13 (for example a rotary vacuum pump) for the elimination of non-condensable gases whose presence would disturb the result of the extraction process. The latter, when mixed with the solvent, would affect its purity and distort the pressure reading in the various bodies of the device.

In addition to the treatment chamber 1 with the solid adsorbent dehydrating material, the present device comprises:
- means for feeding organic solvents containing water to be treated for percolation of the solvents through the dehydrating material;
- means for regenerating the solid adsorbent dehydrating material with an extraction solvent suitable for extracting water from the material once saturated with water, comprising evaporation, compression and recondensation means of the extraction solvent; and
- means for feeding the extraction solvent to the treatment chamber 1, wherein the organic solvent feeding means containing water and the means for feeding the extraction solvent to the treatment chamber are alternately activated for percolation through the material of the solvents to be dehydrated or respectively of the water extraction solvent from the material which has adsorbed it, by means of a valve system, for example a 3-way valve system, designed to guide the alternative activation of the feeding means and alternately distribute the two different solvents. In a preferred aspect, the device, in addition to the valve system, also comprises at least one pump to facilitate the handling of the solvents and increase the overall efficiency of the process.

In a preferred embodiment of this invention, illustrated in the figures appended hereto, the aforementioned evaporation, compression and recondensation means of the extraction solvent are such that the evaporation means comprise an evaporation chamber 3 of the extraction solvent, separated from the treatment chamber 1 and within which the extracted water is to be collected, and the recondensation means comprise a solvent condensation gap 33 formed in the evaporation chamber 3 and in heat exchange therewith in order to exploit the temperature drop occurring upon evaporation of the solvent within said evaporation chamber. As can be seen from the figures, the evaporation chamber 3 may comprise at least one evaporation body 31 and water-rich extraction solvent delivery means from the treatment chamber 1, suitable for distributing the extraction solvent over an internal surface of the body 31 so as to maximise the efficiency of the system in re-condensing the solvent.

In an alternative embodiment of the present invention, the recondensation means within the evaporation chamber may comprise a coil suitably housed within the chamber and in which the condensation process of the super-saturated gas takes place.

In one aspect, downstream of the evaporation chamber 3, one or more filters are positioned to retain any flammable organic solvent vapours leaving the chamber, so as to increase safety with respect to the risks of explosiveness and flammability.

In the embodiment shown in the figures, the hydraulic connection of the chamber 1 with the rest of the device is realized by means of two inlets, a main inlet I1 in the lower part, and a secondary inlet I2 in the upper part of the chamber, in correspondence with the dehydrating material and in such a way that the inlet solvent is intercepted by the solid material possibly housed in the removable container 10. An outlet U can be provided in the lower part of the chamber 1. The main inlet 11, intercepted by a manual valve 8, leads to the solvent treatment chamber 1 from a solvent storage tank 2, which in turn is equipped with a control pressure gauge 16. The secondary inlet I2 feeds the recondensed and regenerated extraction solvent. The outlet U connects, via a delivery line M1, the treatment chamber 1 to the evaporation chamber 3, which in turn consists of a generically cylindrical structure. This connection is intercepted by a solenoid valve 6, a pressure reducer 7 and a lamination device (capillary tube) not shown.

In the figures, the evaporation chamber 3 is associated with a transducer 12 which acts as a probe for continuously monitoring the pressure, providing a control signal to a management unit 14 (for example a PLC programmable logic controller or a microprocessor unit) capable of controlling, in response to said signal, the opening of the solenoid valve 6, thereby automating the introduction of the appropriate amount of solvent inside the evaporation chamber 3. The transducer 12 can also, and similarly, take the form of a temperature sensor.

At the outlet from the evaporation chamber 3, downstream of a dehydrating filter 17, and along a vapour supply line M2-M3, is a system of compressor 4 and condenser 5 with associated pressure transducer 18 and one-way valve 19. The vapour delivery line M2-M3, downstream of the condenser 5, returns to the liquid delivery line M4 and leads to a three-way valve 9, from which a branch returns to the secondary inlet I2 of the treatment chamber 1, and a branch operates a connection with the solvent storage tank 2. The compressor 4 also operates under the control of the control unit 14 and is preferably of the oscillating piston type without the need for lubrication, such as a model of the 500 series manufactured by the company Gardner Denver Thomas (www.thomaspumps.com).

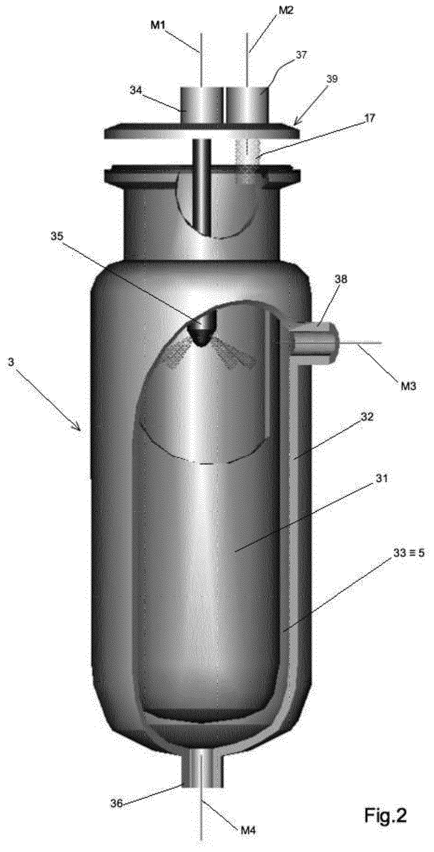

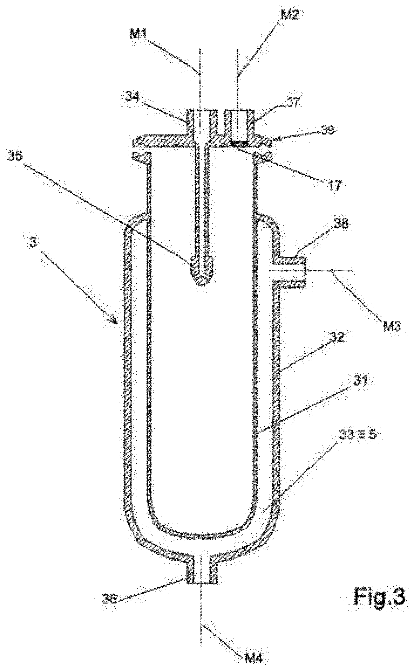

Beyond the simplified process diagram illustrated in figure 1, the condenser 5 can advantageously be integrated into the evaporation chamber 3, to which reference is now made in detail in particular by referring to figures 2 and 3, from which the configuration of this part of the device in an embodiment of the invention is more clearly apparent. The evaporation chamber 3 consists of a real evaporation body 31, which is in turn cylindrical, enveloped by an outer jacket 32 in such a way as to define, precisely between the outer surface of the body 31 and the aforesaid jacket, a condensation cavity 33 which materialises in practice the aforesaid condenser 5. The delivery line M1 of the solvent coming from the treatment chamber 1 is materialised by an axial inlet conduit 34 which leads into the body 31 and terminates with a solvent dispensing nozzle 35. The solvent dispensing nozzle is designed to spread the solvent along the inside walls of the evaporation body 31 in order to promote the evaporation thereof. An axial outlet conduit 36 puts the condensation gap 33 in communication with the outside and represents the line M4 for the delivery to the treatment chamber 1 of the condensed gas, which is then returned to the liquid state inside the said condensation gap. The compressor 4, not shown in figure 2, is connected to the chamber 3 through the aforementioned line M2, defined by an inlet conduit 37, on which the aforementioned filter 17 is noted, positioned adjacent to the axial inlet conduit 34 (M1) and drawing from inside the body 31. The inlet axial conduit 35 and the suction conduit 37 are integral with a cap 39 which removably closes the body 31 at the top, by means of suitable sealing elements. The outlet of the same compressor finally leads to the condensation gap 33, with a radial inlet 38 obtained on the jacket 32 which materialises the (super-saturated) vapour delivery line in the section M3 downstream of the compressor.

In one aspect of the invention, alternate activation of the feeding means of the organic solvents to be treated rather than the extraction solvent to the treatment chamber 1 of the present device is achieved by a 3-way valve system and at least one pump for driving the alternate activation of the feeding means. Referring to the attached Figure 1, a system of three-way valves V1, V2, V3 and V4 and an electric pump E1 connect the treatment chamber 1 to a tank 20 containing the organic solvents to be treated, and assist the suction of the solvents from the tank to the treatment chamber for percolation through the dehydrating material. The tank 20 can also serve as a storage tank for already treated organic solvents. In this embodiment, exemplifying the present device, the valves V1 and V4 specifically allow to alternate, on the solid matrix, the cycles of percolation of the solvent to be treated with the cycles of percolation of the extraction solvent for the regeneration of the solid matrix removing both the residual solvent and the water adsorbed on the surface. In one aspect, the valves of the present valve system are positioned so as to connect the upper inlet and the lower outlet of the chamber 1 with the circuit, preferably regulated by a pump or electric pump E1, during the percolation cycles of the solvent to be treated and, alternatively, with the circuit preferably regulated by a compressor 4 during the percolation cycles of the extraction solvent. Still referring to Figure 1, valves V2 and V3 allow the initial loading of the solvent from the storage tank 10 to chamber 1 and the recovery of the partially anhydrified solvent at the end of the percolation cycles. More specifically, valve V2 enables the solvent pumped by an electric pump E1 to be routed to chamber 1 in the recirculation step or to the storage tank 10 in the recovery step, while the valve V3 enables the pump E1 to take the solvent from the storage tank in the loading step or to the chamber 1 in the recirculation step.

Once the solid dehydrating material is saturated with water, repositioning the valve system activates the supply of the extraction solvent to the treatment chamber 1 for the regeneration of the dehydrating material from which the solvent extracts the adsorbed water, which is taken to accumulate in the evaporation chamber 3.

The process carried out with the device of the invention described above will therefore comprise:
- one or more percolation cycles of an amount of organic solvents containing water through the solid dehydrating material and adsorption of the water in this material;
- one or more percolation cycles of an extraction solvent extracting the water adsorbed by this solid dehydrating material; and
- a regeneration step of the extraction solvent by evaporation, compression and subsequent recondensation, for reuse in the subsequent cycle of extraction of the water adsorbed by the solid dehydrating adsorbing material,
wherein the extraction solvent for the water adsorbed in the solid adsorbent dehydrating material is chosen from the class of halogenated hydrocarbons, such as hydrofluorocarbons, chlorofluorocarbons and hydrochlorofluorocarbons, and/or halogenated hydroolefins, such as hydrofluoroolefins, and wherein the recondensation is carried out by exploiting the temperature drop occurring upon evaporation of the extraction solvent.

In an embodiment of the present process, the halogenated hydrocarbon chosen as the extraction solvent is a hydrofluorocarbon (HFC) liquefiable at low pressures, optionally having an indicative vapour pressure limit value, at room temperature, of about 15 atm. Preferably the extraction solvent used in this process is 1,1,1,2-Tetrafluoroethane known by the trade name R134a.

Any solid dehydrating material capable of adsorbing water from organic solvents containing it may be used in the present process, although zeolites, in particular zeolite type 3A, molecular sieves, silica gel, alumina and clay are preferred materials for use in the present invention. The optimum porosity of the zeolites and molecular sieves can be selected by any technician with ordinary knowledge of the sector depending on the mixture of organic solvents to be dehydrated.

In one aspect of the present process, any non-condensable gases present in the device are removed prior to the start of the process by the use of vacuum pumps capable of achieving at least a partial vacuum within the device, thereby, for example, ensuring the absence of oxygen and improving the safety of the process.

The adsorbed water drawn into the evaporation chamber 3 by the extraction solvent is released cycle after cycle, while the solvent, through evaporation and recondensation, is also regenerated and ready to return to the treatment chamber, free from water and with the maximum regenerating power of the solid dehydrating matrix. As demonstrated in the experimental part below, the extraction solvent's extraction power and the solid material's dehydrating power remain practically unchanged after each regeneration cycle.

At the end of the extraction process, for a duration which can be optimised from time to time by any technician with ordinary knowledge of the sector, depending on the circumstances (including the nature of the dehydrating material, contact surface, any pre-treatment carried out on the material, temperature and pressure conditions, etc.), the solvent, completely regenerated and ready to be used for a new extraction process, is diverted by means of the three-way valve 9 directly to the solvent storage tank 2.

The water, in turn, released in the evaporation chamber 3, is deposited on the bottom of the same, from where it can be recovered from above after removal of the closing cap 39 or by means of a special tap, not shown in the attached figures, the exit being facilitated by the presence of a residual pressure which can be maintained in the evaporation body for this purpose.

The fact that the condenser 5 downstream of the compressor 4 is realized by means of a jacket placed externally to the body 31 of the evaporation chamber 3, the walls of which are affected by the sudden drop in temperature occurring at the time of evaporation of the solvent inside it, in addition to allowing the condensation process of the super-saturated gas coming from the compressor 4, helps to compensate for the temperature drop of the evaporation chamber 3, thus maximising the efficiency of the compressor 4, avoiding the use of an additional heating system inside the evaporation chamber and allowing the whole extraction process to be carried out at an almost constant temperature. The possibility of compensating for the drop in temperature that occurs during the evaporation of the solvent by exploiting the heat accumulated by the gas following the process of compression and subsequent liquefaction of the same also makes it possible to considerably reduce the operating costs of the entire process.

It is useful to reiterate that the total volume of extraction solvent percolating through the solid dehydrating material to be regenerated is the sum and effect of the total number of regeneration cycles of the material, reduced amount of solvent initially loaded into the lower part of the treatment chamber 1. Considering the poor solubility of water in halogenated hydrocarbons and hydroolefins, the possibility of using an amount of extraction solvent quantitatively comparable (at least on an order of magnitude level), by volume, to the solid mass of dehydrating material, regenerating it continuously and in a relatively short time, represents a fundamental advantage of the device of this invention, which makes it economically advantageous to use this class of compounds as solvents to be used in an extraction process of water adsorbed by a solid dehydrating adsorbing material.

Another advantageous aspect to highlight is the use of an evaporation body, separate from the treatment and extraction body, as a water removing means. The separate evaporation body offers two significant advantages. Firstly, as already pointed out, it is possible to exploit the drop in temperature occurring during the evaporation process to obtain condensation of the super-saturated gas coming from the compressor. Secondly, water is removed during the entire extraction process from the adsorbent material and the treatment chamber.

Compared to the known regeneration treatments of adsorbent materials, which are carried out, as mentioned above, by thermal means at high temperatures, in the present procedure the dehydrating material is regenerated by simple washing with the halogenated solvent in the liquid phase, with a considerable reduction in costs and in the risk of progressive deterioration of the material. The possibility of continually regenerating the halogenated extraction solvent by exploiting the transition from the liquid to the gaseous state and vice versa, makes it possible to overcome the low solubility of the water to be extracted in this class of solvents, while still being able to carry out an almost exhaustive extraction of the water, with consequent regeneration of the adsorbent and using a quantity of solvent comparable, or slightly greater, than the mass of dehydrating material to be regenerated.

As mentioned above, the operation of the device is automated through the use of a PLC or equivalent, the implementation and configuration of which will be obvious to a person skilled in the art on the basis of the functional and control requirements highlighted above. The overall circuit arrangement of the device, apart from the general outline of an embodiment thereof as described and illustrated herein, may also be subject to constructional variations as a matter of course in the context of the knowledge acquired in the plant engineering of this type of innovation. When we talk about percolation cycles, we obviously do not mean that the process must necessarily be discontinuous. Indeed, with appropriate controls, the process can be managed in a way that is almost continuous.

A further advantage of the present invention relates to the use of solvents such as R134a, which is neither flammable nor oxidising and is used in the present process in the absence of oxygen, thus in safe conditions from the point of view of explosiveness and flammability, without having to apply the high temperatures commonly used for the regeneration of solid adsorbent matrices, which would increase the risks of explosion and flammability mentioned above.

Last but not least, the advantage of this dehydration device and process is that it can also be easily combined with other solvent purification technologies such as distillation, conventional passage over ion exchange resins, or others, to achieve the desired water and impurity contents in each case.

In the following experimental part, operating tests of the dehydration device according to the invention are reported, which have shown the high efficiency of the process implementable with the present device and its reproducibility, as well as the maintenance of efficiency even after regeneration of the solid dehydrating matrix, as described above.

### Experimental part

### Example 1

The following test was first carried out on the preferential absorption of water on zeolites compared to organic solvents, when the zeolite is placed in contact with mixtures of organic solvents and water.

50 mL of a mixture of ethyl acetate and water at 50% by volume was treated with 25 of natural zeolite for 15 minutes. After this treatment, approximately 27 mL of solution consisting of 37% water and 63% ethyl acetate was recovered, resulting in a reduction in water content of 13% by volume with this pre-treatment.

### Example 2

A synthetic zeolite consisting of molecular sieves with a pore size of 3 angstroms was chosen for testing the device of the invention, called for this purpose zeolite type 3A, or more simply zeolite 3A, as follows.

After having eliminated all incondensable gases within the entire system with a vacuum pump 13, 25 g of zeolite 3A were then previously saturated by maceration treatment with water for 30 minutes, and subsequently housed in the treatment chamber 1 of the present device in the embodiment shown in Figure 1. The zeolite, thus saturated with water, was then partially regenerated by treatment with the refrigerant R134a for 2 hours.

60 mL of a mixture of organic solvents with a water content of 6.450% by volume, initially stored in the tank 20, was injected into treatment chamber 1 with the aid of the electric pump E1 and the operation of the valves V1-V4. The mixture, in addition to the water content mentioned above, consisted of n-butyl acetate, xylene, tetrahydrofuran and acetonitrile.

The mixture of organic solvents and water is allowed to percolate through the zeolite for 30 minutes and then recovered in the same tank 20. Once recovered, the mixture was analysed using a Karl Fisher titrator and it was found that the residual water content had dropped to 5.459% by volume.

The reproducibility of the procedure was verified by repeating the process 2 more times using the same quantity and type of starting mixture, each time alternating a 60-minute zeolite regeneration phase, and percolation cycles of an equal volume of the same mixture of organic solvents, each lasting 30 minutes. Chemical analysis with the Karl Fisher titrator showed a water content of 5.074% and 5.195% by volume.

The regeneration of the zeolite was carried out by flowing about 250 mL of R134a from the storage tank 2, by opening the manual valve 8, into the treatment chamber 1, in the area immediately below the zeolite. Following the timed opening of the solenoid valve 6 and the aid of the pressure regulator 7, 150 mL of R134a solvent was injected into the evaporation chamber 3 (discontinuously thanks to the aid of the solenoid valve over a time period of 1 minute, corresponding to the capacity of the compressor) and, through the nozzle 35, sprayed and made to flow along the internal walls of the evaporation body 31. The solvent evaporated and it was sucked by the compressor 4, through the conduit 37, to be reintroduced in supersaturated form into the condensation gap 33 through the radial inlet 38 of the jacket 32. From the gap, the recondensed vapour was pushed and reintroduced in liquid form into treatment chamber 1 via the secondary inlet 12, thus coming into contact with the zeolite and carrying away the water adsorbed by it, and then accumulating in the lower part of chamber 1. This regeneration phase was repeated 120 times for the first regeneration and 30 times for the next two regenerations. Consequently, for the first regeneration the total volume of solvent that passed through the zeolite is 18 L (150 mL x 120 times) while the total volume that passed through the zeolite for the next two regeneration steps is 4.5 L (150 mL x 30 times), until all the water and the percentage of organic solvents adsorbed on the surface by the material had been removed.

Over the 3 tests carried out, the average reduction in volume of water on the total volume treated was therefore 1.21% by volume.

### Example 3

As in Example 2, this is also the case after removal of the non-condensable gases from the device, 25 g of zeolite 3A were previously saturated by maceration treatment with water for 30 minutes, and then placed in the treatment chamber 1 of the present device. The zeolite, thus saturated with water, was then partially regenerated by treatment with the refrigerant R134a for 2 hours, following the same procedure as described above in Example 2.

At the end, 60 ml of a mixture of organic solvents with a water content of 6.450% by volume were injected into the treatment chamber 1 of the device of the invention in the embodiment shown in Figure 1. In this case the mixture of organic solvents, in addition to the water content mentioned above, consisted of ethyl acetate, acetone, toluene, methyl acetate, methylene chloride, cyclohexane, methanol, and isopropyl alcohol.

The mixture of organic solvents and water was recirculated through the zeolite for 30 minutes and then recovered in the same starting tank 20, while the zeolite was regenerated again with the refrigerant R134a for 60 minutes. The recovered mixture was subjected to chemical analysis using a Karl Fisher titrator to detect its residual water content. The result is shown in Table 1 below.

In order to test the possibility of achieving a further reduction in water content, the solvent mixture recovered after the first treatment cycle on zeolite was again fed from the tank to the treatment chamber 1 of the device of the invention, and then the mixture was recirculated through the zeolite for a further 30 minutes. At the end of this second treatment on zeolite, the mixture was recovered again in the same tank 4 and analysed to detect the residual water content, the value of which is shown in Table 1 below.

The same procedure was then repeated a third time after regenerating the zeolite again with R314a refrigerant, still for a treatment duration of 60 minutes. The mixture, recovered one last time in the tank 4, was analysed and found to have a residual water content as shown in Table 1.

**Table 1**

| | Water content in the recovered organic solvent mixture (% in volume) |
|---|---|
| after the first step on fresh zeolite 3A | 5.020 |
| after the second step on regenerated zeolite 3A once | 4.356 |
| after the third step on zeolite 3A regenerated twice | 4.044 |

After 3 steps of the starting mixture in the present device, a reduction in water content of 2.406% by volume was obtained.

The present invention has been described herein with reference to a preferred embodiment. It is to be understood that there may be other embodiments that relate to the same inventive nucleus, all falling within the scope of protection of the claims provided below.

## Claims

1. A device for dehydration of organic solvents containing water, comprising a treatment chamber (1) housing a solid dehydrating adsorbing material, means for feeding said organic solvents containing water from a storage tank (20) into said treatment chamber (1) for percolating organic solvents containing water through said solid dehydrating adsorbing material, regeneration means for regenerating said solid dehydrating material with an extraction solvent capable of extracting water from said material once saturated with water comprising evaporation, compression and recondensation means of the extraction solvent, and means for feeding said extraction solvent into said treatment chamber (1), said device further comprising a system of valves adapted to alternatively activate said means for feeding said organic solvents containing water to be treated or said means for feeding the extraction solvent into said treatment chamber for percolation through said solid dehydrating adsorbing material of the solvents to be dehydrated or respectively of the extraction solvent for extracting water from said material.

2. The device according to claim 1, wherein said system of valves is a 3-way valve system and said device further comprises at least one pump.

3. The device according to claim 1 or 2, wherein said evaporation means comprise an evaporation chamber (3) for evaporating the extraction solvent, inside which water is collected, and said recondensation means comprise a condensation gap (33) for the condensation of the solvent or a condensation coil obtained in relation to the heat exchange with said evaporation chamber (3) for exploiting the temperature reduction that occurs upon the evaporation of the solvent within said evaporation chamber (3).

4. The device according to claim 3, wherein said evaporation chamber (3) comprises at least one evaporation body (31) and dispensing means for dispensing the extraction solvent rich in water coming from said treatment chamber (1) adapted to distribute the extraction solvent onto an inner surface of said at least one body (31).

5. The device according to claim 3 or 4, wherein said condensation gap (33) is defined by a jacket (32) arranged on the outside of a condensation body, said jacket (32) providing an inlet into the gap (33) of the solvent in a state of supersaturated gas coming from said compression means, and an outlet for the delivery of said extraction solvent, recondensed and free from water, to said treatment chamber (1).

6. The device according to any one of the preceding claims, comprising programmable logic control means configured for controlling said compression means and the inlet of said extraction solvent saturated with water into said evaporation chamber (3) in response to a pressure or temperature signal detected continuously inside the same evaporation chamber.

7. The device according to any one of the preceding claims, wherein said means for feeding said extraction solvent into said treatment chamber (1) comprise a solvent collection tank, said solvent regeneration means comprising means for deviating the solvent, once regenerated and free from water, to said collection tank.

8. The device according to any one of the preceding claims, wherein said means for feeding said organic solvents containing water into said treatment chamber (1) comprise a storage tank (20) for said organic solvents.

9. The device according to any one of the preceding claims, wherein said treatment chamber (1) is equipped with a removable container (10) adapted to contain said solid dehydrating material, and optionally with heating means arranged at a lower end of said treatment chamber (1).

10. A process for dehydration of organic solvents containing water by percolation of said organic solvents through a solid dehydrating adsorbing material in a device as defined in claims 1-9, said process comprising:
- one or more percolation cycles of an amount of organic solvents containing water through said solid dehydrating material and adsorption of the water in said material;
- one or more percolation cycles of an extraction solvent extracting the water adsorbed by said solid dehydrating adsorbing material; and
- a regeneration step of said extraction solvent by evaporation, compression and subsequent recondensation, for reuse in the subsequent cycle of extraction of the water adsorbed by said solid dehydrating adsorbing material,
wherein said extraction solvent for extracting the water adsorbed in said solid dehydrating adsorbing material is selected from halogenated hydrocarbons, such as hydrofluorocarbons, chlorofluorocarbons and hydrochlorofluorocarbons, halogenated hydroolefins, such as hydrofluoroolefins, and mixtures thereof, and wherein said recondensation is achieved by exploiting the reduction of temperature occurring upon evaporation of the extraction solvent.

11. The process according to claim 10, wherein said solid dehydrating material is selected from silica gel, clay, alumina, zeolites and molecular sieves, preferably is type 3A zeolite.

12. The process according to claim 10 or 11, wherein said starting organic solvents are mixtures of organic solvents containing water.

13. The process according to any one of the claims from 10 to 12, wherein said extraction solvent is a hydrofluorocarbon (HFC) that becomes liquefied at moderate pressures, optionally having an indicative limit value of the vapour pressure, at room temperature, of about 15 atm.

14. The process according to claim 13, wherein said extraction solvent is 1,1,1,2-tetrafluoroethane known by the trade name R134a.

15. The process according to any one of the claims from 10 to 14, wherein said amount of extraction solvent, in volume, is in the same order of magnitude as the mass of said solid matrix.
